# EUROPÄISCHE PATENTSCHRIFT

(11) **EP 2 834 094 B1**
(45) Veröffentlichungstag und Bekanntmachung des Hinweises auf die Patenterteilung: **25.05.2016**
(21) Anmeldenummer: 13729670.3
(22) Anmeldetag: 11.06.2013
(51) Int. Cl.: B60H 1/34, B61D 27/00, B61D 17/08, B61D 17/12

(54) **LUFTKANALSYSTEM FÜR EIN SCHIENENFAHRZEUG DES PERSONENVERKEHRS**
AIR DUCT SYSTEM FOR A RAIL VEHICLE OF PASSENGER TRAFFIC
SYSTÈME DE CONDUITS D'AIR POUR UN VÉHICULE FERROVIAIRE DESTINÉ AU TRANSPORT DE PERSONNES

(30) Priorität: 17.07.2012 DE 102012212466
(43) Veröffentlichungstag der Anmeldung: 11.02.2015
(73) Patentinhaber: Siemens Aktiengesellschaft, 80333 München (DE)
(72) Erfinder: BRENDEL, Thomas, 40822 Mettmann (DE); MATHIA, Ute, 90513 Zirndorf (DE)
(86) Internationale Anmeldenummer: PCT/EP2013/061966
(87) Internationale Veröffentlichungsnummer: WO 2014/012711

(56) Entgegenhaltungen:
- DE-A1-102005 031 912
- DE-C1- 19 654 633
- US-A- 5 399 121

## Beschreibung

Die Erfindung betrifft ein Luftkanalsystem für ein Schienenfahrzeug des Personenverkehrs, mit einem ersten Teil-Lüftungskanal, einem zweiten Teil-Lüftungskanal und einer verformbar und/oder bewegbar gehaltenen Membran.

Ein Luftkanalsystem für ein Schienenfahrzeug des Personenverkehrs umfasst in kompakter Bauweise einen Luftkanal zum Führen von Warmluft zum Heizen und von Kaltluft zum Kühlen des Schienenfahrzeugs. Die Luft-Volumenströme zum Heizen und Kühlen unterscheiden sich dabei üblicherweise. Luftkanalquerschnitte und Luftauslässe im Luftkanal zur Belüftung eines Innenraums des Schienenfahrzeugs sind im Regelfall auf den höheren Luft-Volumenstrom ausgelegt, was den Nachteil einer ungleichmäßigen Luftverteilung bei einem niedrigeren Luft-Volumenstrom mit sich bringt.

Alternativ sind zwei voneinander getrennte Teil-Lüftungskanäle vorgesehen, einer für Warm- und ein weiterer für Kaltluft. Die Luftauslässe sind dann entsprechend an die unterschiedlichen Luft-Volumenströme angepasst, um eine gleichmäßige Luftverteilung im Schienenfahrzeug zu erreichen. Dazu befindet sich gemäß der DE 10 2005 031 912 A1 eine Membran als Trennwand zwischen beiden Teil-Lüftungskanälen. Abhängig vom Luftdruck vergrößert sie einen ersten, bei gleichzeitiger Verkleinerung eines zweiten Teil-Lüftungskanals. Ein Luftaustausch zwischen den Teil-Lüftungskanälen ist nicht vorgesehen. Nachteilig an den Luftkanalsystemen mit zwei getrennten Teil-Lüftungskanälen ist ihr vergrößerter Bauraumbedarf im Vergleich zu den Luftkanalsystemen mit nur einem Lüftungskanal.

Der Erfindung liegt die Aufgabe zugrunde, ein Luftkanalsystem vorzuschlagen, welches kompakt ist und eine gleichmäßige Luftverteilung im Schienenfahrzeug ermöglicht.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Schienenfahrzeug des Personenverkehrs umfasst ein erfindungsgemäßes Luftkanalsystem mit einem ersten Teil-Lüftungskanal, einem zweiten Teil-Lüftungskanal und einer verformbar und/oder bewegbar gehaltenen Membran, wobei der erste Teil-Lüftungskanal zumindest eine Öffnung zum zweiten Teil-Lüftungskanal und zumindest einen Luftauslass zur Belüftung eines Innenraums des Fahrzeugs aufweist, und wobei die Membran derart verformbar und/oder bewegbar gehalten und so am oder im Luftkanalsystem, insbesondere im ersten Teil-Lüftungskanal, angeordnet ist, dass sie in einem ersten Zustand die Öffnung verkleinert oder schließt und den Luftauslass freigibt, und dass sie in einem zweiten Zustand den Luftauslass verkleinert oder schließt und die Öffnung freigibt.

Im ersten Teil-Lüftungskanal wird ein Fluid, insbesondere Luft, geführt. Ein Luftstrom eines vorgegebenen Volumens wird beispielsweise von einem Klimagerät erzeugt und in den ersten Teil-Lüftungskanal geleitet. Gemäß einer Ausgestaltungsform der Erfindung sind mehrere Öffnungen und/oder Luftauslässe im ersten Teil-Lüftungskanal vorgesehen. Gemäß einer Weiterbildung des erfindungsgemäßen Luftkanalsystems sind mehrere Öffnungen verteilt über die Länge des ersten Teil-Lüftungskanal angeordnet. Gemäß einer weiteren Weiterbildung des erfindungsgemäßen Luftkanalsystems sind mehrere Luftauslässe verteilt über die Länge des ersten Teil-Lüftungskanal angeordnet. Gemäß einer Weiterbildung des erfindungsgemäßen Luftkanalsystems sind mehrere Öffnungen und mehrere Luftauslässe verteilt über die Länge des ersten Teil-Lüftungskanal angeordnet. Durch die Öffnung bzw. durch die Öffnungen und/oder durch den Luftauslass bzw. durch die Luftauslässe passieren anteilig Teil-Luft-Volumenströme. Verkleinert die Membran im ersten Zustand die Öffnung bzw. die Öffnungen, ist der Teil-Luft-Volumenstrom durch die Öffnung bzw. durch die Öffnungen gedrosselt, im Vergleich zur freigegebenen Öffnung bzw. im Vergleich zu den freigegebenen Öffnungen. Gleichermaßen ist der Teil-Luft-Volumenstrom durch den Luftauslass bzw. durch die Luftauslässe gedrosselt, wenn die Membran den Luftauslass bzw. die Luftauslässe im zweiten Zustand verkleinert, verglichen mit dem Teil-Luft-Volumenstrom durch den Luftauslass bzw. die Luftauslässe im freigegebenen Zustand des Luftauslasses bzw. der Luftauslässe. Nachfolgend ist der Einfachheit halber die Erfindung mit einer Öffnung und einem Luftauslass beschrieben, ohne dabei die Ausführungen mit mehreren Öffnungen und/oder Luftauslässen auszuschließen. Beim Verschluss von Öffnung oder Luftauslass unterbindet die Membran die Strömung der Luft durch die Öffnung respektive den Luftauslass.

Die Membran umfasst weiterbildungsgemäß ein luftdichtes oder luftdicht beschichtetes Textil. Somit ist die Membran geeignet, die Öffnung und/oder den Luftauslass in einfacher Weise luftdicht zu verschließen. Um die Öffnung und/oder den Luftauslass zu verkleinern, weist die Membran, gemäß einer weiteren Weiterbildung der Erfindung, zumindest ein Loch auf, welches kleiner ist im Vergleich zur Öffnung und/oder im Vergleich zum Luftauslass, insbesondere ein Loch mit einer geringeren lichte Weite als die der Öffnung und/oder die des Luftauslasses.

Eine Ausführungsform der Erfindung sieht vor, dass die Membran zum Verkleinern der Öffnung mehrere Löcher einer jeweils vorgegebenen lichten Weite aufweist, deren Summe kleiner ist als die lichte Weite der Öffnung und/oder, dass die Membran zum Verkleinern des Luftauslasses mehrere Löcher einer jeweils vorgegebenen lichten Weite aufweist, deren Summe kleiner ist als die lichte Weite des Luftauslasses.

Eine andere Ausführungsform der Erfindung sieht vor, dass mehrere Öffnungen über die Länge des ersten Teil-Lüftungskanal vorgesehen sind und/oder, dass mehrere Luftauslässe über die Länge des ersten Teil-Lüftungskanal vorgesehen sind, und dass die Membran zum Verkleinern der Öffnungen zumindest ein Loch aufweist, dessen lichte Weite kleiner ist, als die Summe der lichten Weiten der Öffnungen und/oder, dass die Membran zum Verkleinern der Luftauslässe zumindest ein Loch aufweist, dessen lichte Weite kleiner ist als die Summe der lichten Weiten der Luftauslässe.

Gemäß einer weiteren Variante weist die Membran zum Verkleinern der Öffnungen mehrere Löcher einer jeweils vorgegebenen lichten Weite auf, deren Summe kleiner ist als die Summe der lichten Weiten der Öffnungen und/oder, die Membran weist zum Verkleinern des Luftauslässe mehrere Löcher einer jeweils vorgegebenen lichten Weite auf, deren Summe kleiner ist als die Summe der lichten Weiten der Luftauslässe.

Somit ist es möglich, dass wenige, jedoch größere Löcher den Luft-Volumenstrom durch viele kleinere Öffnungen und/oder Luftauslässe begrenzen. Sowohl die Löcher, als auch die Öffnungen und/oder die Luftauslässe begrenzen jeweils einen Teil-Luft-Volumenstrom durch sie hindurch. Dabei sind nicht die einzelnen lichten Weiten für die Größe der Teil-Luft-Volumenströme entscheidend, sondern die jeweils gesamte durchströmte Fläche.

In einer weiteren Weiterbildung ist die ansonsten luftdichte oder luftdicht beschichtete Membran perforiert.

In einer Ausführungsform des erfindungsgemäßen Luftkanalsystems ist das Loch zum Luftauslass so ausgestaltet, dass im ersten Zustand der Membran ein Teil-Luft-Volumenstrom durch das Loch und ein weiterer Teil-Luft-Volumenstrom durch den Luftauslass im Wesentlichen gleich groß sind, beispielsweise in erster Nährung dadurch, dass die Summen der lichten Weiten der Luftauslässe und der Löcher im Wesentlichen gleich sind. Strömungstechnisch spielen weitere Faktoren eine Rolle, wie beispielsweise Anzahl und Form der Löcher oder der Luftauslässe, ihre Lagen im Luftkanalsystem, beispielsweise die Lage der Löcher zu den Öffnungen und deren Anzahl, Form und Größe.

Gemäß einer weiteren Weiterbildung der erfindungsgemäßen Lösung ist eine Bewegung und/oder Verformung der Membran zwischen dem ersten und dem zweiten Zustand der Membran frei von Fremdenergie, allein durch eine Änderung der Volumenstromverhältnisse der Luftströme und der damit verbunden Änderung der Druckverhältnisse im Luftkanalsystem, insbesondere durch eine Änderung des Volumenstroms eines ersten Teil-Luftstroms im ersten Teil-Lüftungskanal, bedingt. Zur Unterstützung der Bewegung und/oder Verformung der Membran oder alternativ zur fremdenergiefreien Bewegung und/oder Verformung der Membran können Mittel zur Bewegung und/oder Verformung der Membran vorgesehen sein. In einer Variante der Erfindung ist ein Stellelement am Eingang des ersten Teil-Lüftungskanals vorgesehen, welches geeignet ist, den Luftstrom in den ersten Teil-Lüftungskanal so zu führen, beispielsweise durch gezieltes Anströmen der Membran, dass sich die Membran vom ersten in den zweiten Zustand bewegt und/oder verformt oder, dass sich die Membran vom zweiten in den ersten Zustand bewegt und/oder verformt. Im weiteren Verlauf des ersten Teil-Lüftungskanals ist der Zustand der Membran durch den Luft-Volumenstrom und den davon abhängigen Druckverhältnissen bedingt.

In einer weiteren Weiterbildung der Erfindung wird vorgeschlagen, dass die Membran so am Luftkanalsystem angeordnet ist, dass sie den ersten Teil-Lüftungskanal zum Führen eines Luftstroms begrenzt, und dass sie derart verformbar und/oder bewegbar gehalten ist, dass der Querschnitt des ersten Teil-Lüftungskanals im zweiten Zustand kleiner ist als im ersten Zustand. In einem Ausgestaltungsbeispiel begrenzt die Membran den ersten Teil-Lüftungskanal dadurch, dass sie an zwei, in der Querschnittsebene liegenden und voneinander beabstandeten Stellen des ersten Teil-Lüftungskanals angeordnet ist. Abstände dieser Querschnittsebene zu, insbesondere zu ihr parallelen, zwei Wandungen des ersten Teil-Lüftungskanals sind dann insbesondere unterschiedlich groß. Zusätzlich kann sich die Membran parallel zu einer Längsachse des ersten Teil-Lüftungskanal erstrecken.

Weitergebildet weist der erste Teil-Lüftungskanal zumindest zwei in Längsrichtung des ersten Teil-Lüftungskanals voneinander beabstandete Luftauslässe auf. Die Membran erstreckt sich parallel zu einer Längsachse des ersten Teil-Lüftungskanals zumindest zwischen den zwei Luftauslässen und begrenzt den ersten Teil-Lüftungskanal. Die Membran und die Luftauslässe sind weiterbildungsgemäß so aufeinander abgestimmt, dass im ersten Zustand der Membran, bei einem vorgegebenem Gesamt-Luft-Volumenstrom, insbesondere im ersten Teil-Lüftungskanal, die Teil-Luft-Volumenströme aus beiden Luftauslässen im Wesentlichen gleich groß sind. Trifft die Luft im ersten Teil-Lüftungskanal zuerst auf den ersten Luftauslass, um anschließend zum zweiten Luftauslass weitergeführt zu werden, tritt zunächst ein Teil-Luft-Volumenstrom aus dem ersten Luftauslass auf; auf den zweiten Luftauslass trifft entsprechend ein um den ausgetretenen Teil-Luft-Volumenstrom verringerter Luft-Volumenstrom. Um im Wesentlichengleiche große Teil-Luft-Volumenströme aus beiden Luftauslässen zu erreichen, sind die lichten Weiten der Luftauslässe und der Querschnitt des ersten Teil-Lüftungskanals, begrenzt durch die Membran, aufeinander abgestimmt. Sind, wie in einem Ausgestaltungsbeispiel, die Luftauslässe im Wesentlichen gleich, ist der Querschnitt des ersten Teil-Lüftungskanals im Bereich des ersten Luftauslasses vergrößert im Vergleich zum Querschnitt des ersten Teil-Lüftungskanals im Bereich des zweiten Luftauslasses. Alternativ variieren beispielsweise die Luftauslässe in ihrer Größe oder die Membran ist elastisch verformbar gehalten. So wird die Luft über die Länge zumindest des ersten Teil-Lüftungskanals, insbesondere aber über die Länge des Luftkanalsystems, gleichmäßig ausgeblasen.

Weitergebildet weist der erste Teil-Lüftungskanal zumindest zwei in Längsrichtung des ersten Teil-Lüftungskanals voneinander beabstandete Öffnungen auf, wobei sich die Membran zumindest zwischen den zwei Öffnungen parallel zu einer Längsachse des ersten Teil-Lüftungskanals erstreckt und den ersten Teil-Lüftungskanal begrenzt, wobei die Membran und die Öffnungen so aufeinander abgestimmt sind, dass im zweiten Zustand der Membran, bei einem vorgegebenem Gesamt-Luft-Volumenstrom, insbesondere im ersten Teil-Lüftungskanal, die Teil-Luft-Volumenströme aus beiden Öffnungen im Wesentlichen gleich groß sind. Dies gilt insbesondere auch für den ersten Zustand. Dort werden die Teil-Luft-Volumenströme durch die Öffnungen durch die Löcher in der Membran festgelegt.

Der Gesamt-Volumen-Luftstrom ist beim Kühlen üblicherweise höher als beim Heizen. Die lichten Weiten von Luftauslässen und Öffnungen sind an die unterschiedlichen Gesamt-Volumen-Luftströme angepasst, um eine gleichmäßige Luftverteilung im Fahrzeug zu erreichen. So werden beispielsweise die Luftauslässe auf den Luftstrom beim Kühlen ausgelegt und die Öffnungen entsprechend auf den Luft-Volumenstrom während des Heizens.

Eine weitere Weiterbildung des erfindungsgemäßen Luftkanalsystems sieht vor, dass zwei Luftauslässe nebeneinander auf einer Senkrechten zur Längsrichtung des ersten Teil-Lüftungskanals im Teil-Lüftungskanal angeordnet sind, wobei die Anordnung der Membran im Luftkanalsystem und die Beweglichkeit und/oder die Verformbarkeit der Membran und die lichten Weiten der beiden Luftauslässe so aufeinander abgestimmt sind, dass im ersten Zustand der Membran die Luft-Volumenströme aus beiden Luftauslässen im Wesentlichen gleich groß sind. Hier genügen beispielsweise zwei gleich große Luftauslässe und eine zu Mittelachse zwischen den beiden Luftauslässen symmetrisch ausgestaltete Membran, bei einem längs der Längsachse des ersten Teil-Lüftungskanals geführten Gesamt-Luftstrom.

Gemäß einer weiteren Weiterbildung der Erfindung ist der erste Teil-Lüftungskanal als Dachluftkanal in einer Decke des Fahrzeugs angeordnet, und der zweite Teil-Lüftungskanal ist in Seitenwänden des Fahrzeugs angeordnet. Der zweite Teil-Lüftungskanal führt insbesondere vom Dachluftkanal durch die Seitenwände des Fahrzeugs bis zum Boden des Fahrzeugs.

Gemäß einer Weiterbildung des erfindungsgemäßen Luftkanalsystems sind zumindest zwei Teil-Lüftungskanäle am ersten Teil-Lüftungskanal angeordnet, insbesondere liegen sich die korrespondieren Öffnungen zu den zwei Teil-Lüftungskanälen gegenüber. Beispielsweise ist das Luftkanalsystem im Querschnitt symmetrisch aufgebaut.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt ein erfindungsgemäßes Luftkanalsystem im Querschnitt mit einer Membran in einem ersten Zustand,
- Fig. 2: zeigt das erfindungsgemäße Luftkanalsystem aus Fig. 1 im Querschnitt mit einer Membran in einem zweiten Zustand,
- Fig. 3: zeigt ein weiteres erfindungsgemäßes Luftkanalsystem im Querschnitt mit einer Membran in einem ersten Zustand,
- Fig. 4: zeigt das erfindungsgemäße Luftkanalsystem aus Fig.3 im Querschnitt mit einer Membran in einem zweiten Zustand,
- Fig. 5: zeigt ein erfindungsgemäßes Luftkanalsystem im Querschnitt mit einer Membran in einem ersten Zustand,
- Fig. 6: zeigt das erfindungsgemäße Luftkanalsystem aus Fig.5 im Querschnitt mit einer Membran in einem zweiten Zustand.

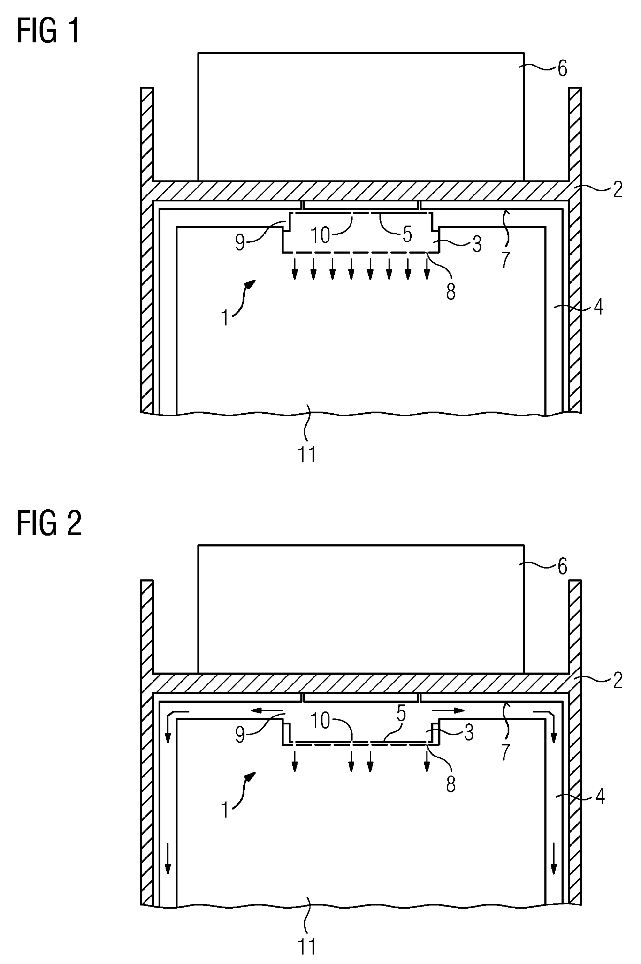

In Fig. 1 ist ein erfindungsgemäßes Luftkanalsystem 1 im Querschnitt dargestellt. Es umfasst einen ersten Teil-Lüftungskanal 3 zum Führen eines Teil-Luftstroms als Dachluftkanal in der Decke eines Schienenfahrzeugs 2, zwei zweite Teil-Lüftungskanäle 4, welche symmetrisch an den Seiten des ersten Teil-Lüftungskanals 3 angeordnet und in Seitenwänden des Schienenfahrzeugs 2 verlaufend, einen Teil-Luftstrom bis zum Boden des Schienenfahrzeugs 2 führen. Die zweiten Teil-Lüftungskanäle 4 sind hier beispielsweise nur punktuell am ersten Teil-Lüftungskanal 3 seitlich angebracht. D.h. der erste Teil-Lüftungskanal 3 erstreckt sich entlang seiner Längsachse in die Zeichenebene hinein bzw. aus ihr heraus. Die zweiten Teil-Lüftungskanäle 4 verlaufen, hier zudem zueinander fluchtend, hingegen senkrecht dazu und weisen eine im Vergleich zum ersten Teil-Lüftungskanal 3 kleine Ausdehnung in Richtung der Längsachse des ersten Teil-Lüftungskanals 3 auf. Darüber hinaus können mehrere zweite Teil-Lüftungskanäle 4 über die Länge des ersten Teil-Lüftungskanals 3 verteilt angeordnet sein.

Des Weiteren weist das Lüftungssystem 1 eine Membran 5 auf. Sie ist erfindungsgemäß beweglich und/oder verformbar ausgebildet, insbesondere bewegt und/oder verformt sich die Membran zwischen zwei Zuständen. In den skizzierten Ausführungsbeispielen klappt die Membran 5 zur Regulierung der Teil-Luftströme in den Teil-Lüftungskanälen 3 und 4 zwischen einem ersten und einem zweiten Zustand um. Ein Zustand ist dabei insbesondere stabil, der andere insbesondere metastabil. Es ist für den Übergang zwischen den zwei Zuständen die Aufwendung einer mechanischen Kraft auf die Membran 5 erforderlich. Diese wird insbesondere durch die Luftströme, insbesondere das Volumen des Teil-Luftstroms im ersten Teil-Lüftungskanal 3, über den von ihm eigenen Luftdruck auf die Membran 5 aufgebracht. Das Umklappen der Membran 5 ähnelt somit dem Knacken eines Knackfroschs. Alternativ wird die Membran 5 nur durch den Luftdruck im zweiten oder ersten Zustand gehalten. Gegebenenfalls liegt die Membran 5 an Anschlägen an, wodurch dann auch von erster und/oder zweiter Endlage gesprochen werden kann.

Der erste Teil-Lüftungskanal 3 wird hier gebildet durch eine vom Innenraum 11 des Schienenfahrzeugs 2 wegweisende Nut in der Decke des Schienenfahrzeugs 2 und einer an beiden Nutflanken angebrachten Membran 5, welche im ersten Zustand an einer Deckefläche 7 anliegt. Der Nutgrund ist mit Luftauslässen 8 durchsetzt und begrenzt den ersten Teil-Lüftungskanal 3 nach unten hin, die Membran 5 begrenzt den ersten Teil-Lüftungskanal 3 nach oben hin. Sie weist ebenfalls einen topfförmigen Querschnitt auf und bildet eine Nut, welche der Nut in der Decke jedoch gegenübersteht. Die Membran 5 weist in einer an der Deckenfläche 7 anliegenden Fläche Löcher 10 auf, welche durch die Anlage an der Deckenfläche 7 jedoch geschlossen und damit im ersten Zustand ohne Funktion sind. Die Flanken der Membran 5 sind in diesem Ausführungsbeispiel frei von Löchern. Die Membran 5 selbst besteht aus einem luftdichten Textil. Dadurch tritt Luft eines Luftstroms, welcher von einem Klimagerät 6 erzeugt und in den ersten Teil-Lüftungskanal 3 geleitet und von diesem in axialer Richtung geführt wird, alleine durch die Luftauslässe 8 im ersten Teil-Lüftungskanal 3 in den Innenraum 11 des Schienenfahrzeugs 2 aus.

Fig. 2 skizziert nun das erfindungsgemäße Lüftungssystem aus Fig. 1, wobei die Membran 5 in einem zweiten Zustand ist. Die zweiten Teil-Lüftungskanäle 4 sind über, hier gleich große, Öffnungen 9 im ersten Teil-Lüftungskanal 3 mit diesem verbunden. Da die zweiten Teil-Lüftungskanäle 4 über die Länge des ersten Teil-Lüftungskanal 3 verteilt angeordnet sind, sind natürlich auch mehrere Öffnungen 9 verteilt über die Länge des ersten Teil-Lüftungskanals 3 vorgesehen. Diese Öffnungen 9 sind im ersten Zustand gemäß Fig. 1 von der Membran 5 verschlossen, d.h. Fluid, insbesondere Luft, aus dem ersten Teil-Lüftungskanal 3 kann nicht durch die Öffnungen 9 in den zweiten Teil-Lüftungskanal 4 strömen. Hier in Fig. 2 sind die Öffnungen 9 von der Membran 5 im zweiten Zustand freigegeben. Luft aus dem ersten Teil-Lüftungskanal 3 strömt daher ungehindert durch die Öffnungen 9 in den zweiten Teil-Lüftungskanal 4. Luftströmungen sind in allen Figuren durch Pfeile angedeutet.

Der erste Teil-Lüftungskanal 3 wird im zweiten Zustand der Membran 5 gebildet durch die Membran 5, die wiederum die Form einer Nut annimmt, und durch die Deckenfläche 7, an welcher die Membran 5 im ersten Zustand noch angelegen ist. Seitenflächen sind in den Querschnitten nicht veranschaulicht. Diese begrenzen den ersten Teil-Lüftungskanal 3 zwischen den Öffnungen 9.

Im zweiten Zustand ist die Form der Membran 5 jedoch komplementär zur Nut in der Decke. Im Querschnitt scheinen zwei Töpfe ineinandergestellt. Die Membran 5 liegt jedoch nicht mit ihrer Fläche, welche die Löcher 10 aufweist, am Nutgrund der Nut in der Decke mit den Luftauslässen 8 an, so dass der Flächeninhalt der Querschnittsfläche des ersten Teil-Lüftungskanals 3 im zweiten Zustand kleiner ist im Vergleich zum ersten Zustand. So steht nur im ersten Zustand der komplette Querschnitt zur Luftführung zur Verfügung. Weist die Membran 5, wie hier veranschaulicht, im ersten und zweiten Zustand das Gleiche oder ein ähnliches Profil auf, ist die genannte Differenz in den Querschnittsflächen des ersten Teil-Lüftungskanals 3 vorgebbar durch die Anordnung der Membran 3 im Luftkanalsystem 1 und ihrer Verbindung zum Luftkanalsystem 1.

Neben dem Teil-Luftstrom durch die Öffnungen 9 in den zweiten Teil-Lüftungskanal 4 strömt Luft aus dem ersten Teil-Lüftungskanal 3 durch die Löcher 10 in der Membran 5 und anschließend durch die Luftauslässe 8 in den Innenraum des Schienenfahrzeugs. Durch Anzahl, Form, Lage und insbesondere Größe der Löcher 10 ist das Verhältnis der Volumina von den Teil-Luftströmen durch die Öffnungen 9 und durch die Luftauslässe 8, bei vorgegebenem Volumen des Gesamt-Luftstroms, vorgebbar.

Im ersten Zustand wird insbesondere Kaltluft im Luftkanalsystem 1 geführt und entsprechend durch die Luftauslässe 8 in der Decke ausgeblasen. Im zweiten Zustand strömt insbesondere Warmluft im Luftkanalsystem 1, welche entsprechend hauptsächlich durch den zweiten Teil-Lüftungskanal 4 in den Boden des Schienenfahrzeugs 2 geführt wird und dort ausgeblasen wird. Entsprechend zeigt Fig. 1 eine mögliche Luftführung während eines Kühlvorgangs und Fig. 2 eine mögliche Luftführung während einer Heizphase.

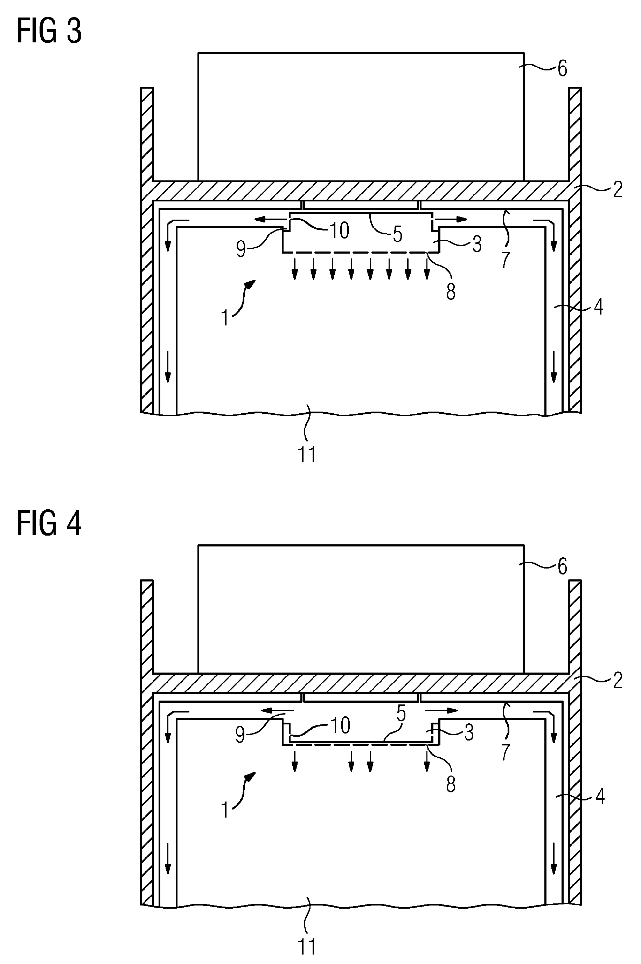

In Fig. 3 ist ein im Wesentlichen gleich ausgestaltetes Lüftungssystem 1 zu erkennen. Wiederum senkrecht zu einer Mittelachse durch die sich gegenüberliegenden Öffnungen 9, sind mehrere Luftauslässe 8 im ersten Teil-Lüftungskanal 3 angeordnet, um den Innenraum 11 des Schienenfahrzeugs 2 zu belüften. Diese können ebenfalls längs zur Längsachse des ersten Teil-Lüftungskanals 3 verteilt über den ersten Teil-Lüftungskanal 3 angeordnet sein. Die Membran 5 weist dagegen keine Löcher in der Fläche auf, welche im ersten Zustand an der Deckenfläche 7 anliegt. Dafür Löcher 10 in den Flanken. Durch die Löcher 10 in den Flanken der Membran tritt Luft aus dem ersten Teil-Lüftungskanal 3 in den zweiten Teil-Lüftungskanal 4. Ansonsten ist die Membran 5, wie bereits oben ausgeführt, als Luftdichte Textilmembran ausgeführt. Die Löcher 10 weisen hier jeweils eine kleinere lichte Weite auf, als die Öffnungen 9. Dadurch ist der Luftstrom durch die Öffnungen 9 gedrosselt im Vergleich zum zweiten Zustand.

Im zweiten Zustand gemäß Fig. 4 sind die Luftauslässe 8 durch die Membran 5 verschlossen. Auch hier weist wiederum die Membran 5 im ersten und zweiten Zustand im Wesentlichen die gleiche Kontur auf, nur spiegelverkehrt, mit einer Spiegelebene durch die Verbindungspunkte der Membran 5 mit dem ersten Teil-Lüftungskanal 3.

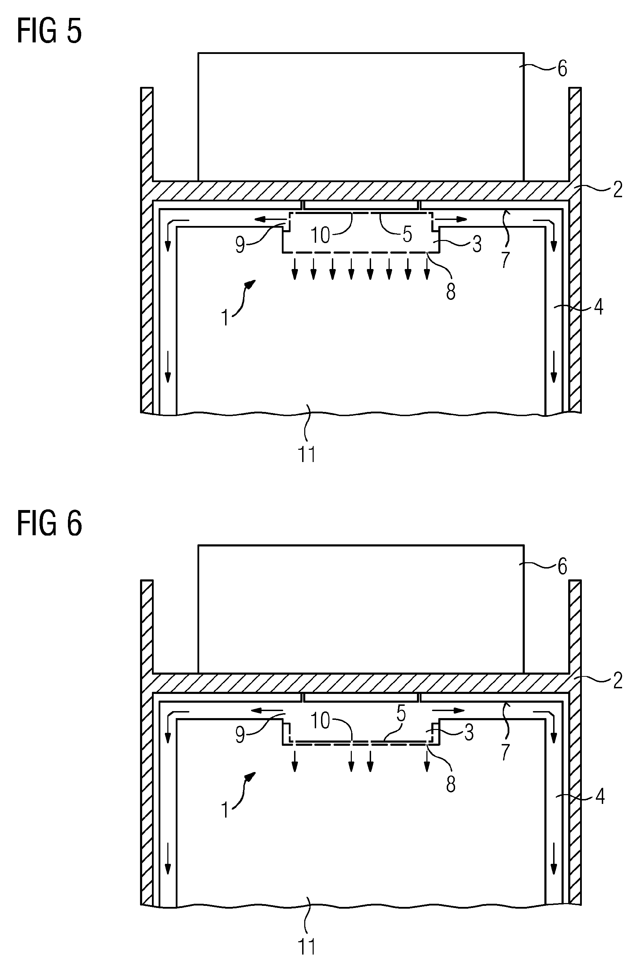

In Fig. 5 und 6 ist wiederum ein Lüftungssystem 1 im ersten und zweiten Zustand unterschieden. Die Membran 5 reguliert als Ventil wiederum die Teil-Luftströme durch die Teil-Lüftungskanäle 3 und 4. Fig. 5 zeigt die Luftverteilung im Kühlbetrieb, Fig. 6 im Heizbetrieb. Die Membran weist Löcher 10 sowohl in ihrer im ersten Zustand an der Deckenfläche 7 anliegenden Fläche auf, als auch in ihren Flanken. Dadurch strömt in beiden Zuständen Luft durch beide Teil-Lüftungskanäle 3 und 4. Die Größe der Volumina der entsprechenden Teil-Luftströme hängt wiederum von der Anzahl, Lage, Form und Größe der Löcher 10 in der Membran 5 und dem Luftdruck, insbesondere im ersten Teil-Lüftungskanal, ab, wobei diese Parameter-Aufzählung nicht als vollständig angesehen werden darf. Die Membran 5 kann dergestalt sein, dass eine Bewegung und/oder Verformung der Membran 5 frei von Fremdenergie, allein durch eine Luftdruckänderung im Luftkanalsystem bedingt ist, oder es ist, abhängig von der Betriebsart ein Stellelement am Eingang des ersten Teil-Lüftungskanals vorgesehen, über welches der Zustand der Membran eingestellt wird.

## Patentansprüche

1. Luftkanalsystem (1) für ein Schienenfahrzeug (2) des Personenverkehrs, mit einem ersten Teil-Lüftungskanal (3), einem zweiten Teil-Lüftungskanal (4) und einer verformbar und/oder bewegbar gehaltenen Membran (5), wobei der erste Teil-Lüftungskanal (3) zumindest einen Luftauslass (8) zur Belüftung eines Innenraums (11) des Schienenfahrzeugs aufweist, **dadurch gekennzeichnet, dass** der erste Teil-Lüftungskanal (3) zumindest eine Öffnung (9) zum zweiten Teil-Lüftungskanal (4) aufweist, und die Membran (5) derart verformbar und/oder bewegbar gehalten und so am Luftkanalsystem (1) angeordnet ist, dass sie in einem ersten Zustand die Öffnung (9) verkleinert oder schließt und den Luftauslass (8) freigibt, und dass sie in einem zweiten Zustand den Luftauslass (8) verkleinert oder schließt und die Öffnung (9) freigibt.

2. Luftkanalsystem nach Anspruch 1, **dadurch gekennzeichnet, dass** mehrere Öffnungen (9) über die Länge des ersten Teil-Lüftungskanal (3) vorgesehen sind und/oder, dass mehrere Luftauslässe (8) über die Länge des ersten Teil-Lüftungskanal (3) vorgesehen sind.

3. Luftkanalsystem nach einem der Ansprüche 1 oder 2, **dadurch gekennzeichnet, dass** die Membran (5) zum Verkleinern der Öffnung (9) ein Loch (10) aufweist, welches eine geringere lichte Weite aufweist als die Öffnung (9) und/oder, dass die Membran (5) zum Verkleinern des Luftauslasses (8) ein Loch (10) aufweist, welches eine geringere lichte Weite aufweist als der Luftauslass (8).

4. Luftkanalsystem nach einem der Ansprüche 1 bis 3, **dadurch gekennzeichnet, dass** die Membran (5) ein luftdichtes oder luftdicht beschichtetes Textil umfasst.

5. Luftkanalsystem nach einem der Ansprüche 1 bis 4, **dadurch gekennzeichnet, dass** eine Bewegung und/oder Verformung der Membran (5) frei von Fremdenergie, allein durch eine Luftdruckänderung an der Membran (5) im Luftkanalsystem (1) bedingt ist.

6. Luftkanalsystem nach einem der Ansprüche 1 bis 5, **dadurch gekennzeichnet, dass** der erste Teil-Lüftungskanal (3) zumindest zwei in Längsrichtung des ersten Teil-Lüftungskanals (3) voneinander beabstandete Luftauslässe (8) aufweist, und dass sich die Membran (5) zumindest zwischen den zwei Luftauslässen (8) parallel zu einer Längsachse des ersten Teil-Lüftungskanals (3) erstreckt und den ersten Teil-Lüftungskanal (3) begrenzt, wobei die Membran (5) und die Luftauslässe (8) so aufeinander abgestimmt sind, dass im ersten Zustand der Membran (5), bei einem vorgegebenem Gesamt-Luftstrom, die Luftströme aus beiden Luftauslässen im Wesentlichen gleich groß sind.

7. Luftkanalsystem nach einem der Ansprüche 1 bis 6, **dadurch gekennzeichnet, dass** der erste Teil-Lüftungskanal (3) zumindest zwei in Längsrichtung des ersten Teil-Lüftungskanals (3) voneinander beabstandete Öffnungen (9) aufweist, und dass sich die Membran (5) zumindest zwischen den zwei Öffnungen (9) parallel zu einer Längsachse des ersten Teil-Lüftungskanals (3) erstreckt und den ersten Teil-Lüftungskanal (3) begrenzt, wobei die Membran (5) und die Öffnungen (9) so aufeinander abgestimmt sind, dass im zweiten Zustand der Membran (5), bei einem vorgegebenem Gesamt-Luftstrom, die Luftströme aus beiden Öffnungen (9) im Wesentlichen gleich groß sind.

8. Luftkanalsystem nach einem der Ansprüche 1 bis 7, **dadurch gekennzeichnet, dass** die Membran (5) so am Luftkanalsystem (1) angeordnet ist, dass sie einen Querschnitt des ersten Teil-Lüftungskanals (3) zum Führen eines Luftstroms begrenzt, und dass sie derart verformbar und/oder bewegbar gehalten ist, dass der Querschnitt im zweiten Zustand kleiner ist als im ersten Zustand.

9. Schienenfahrzeug (2) des Personenverkehrs, **dadurch gekennzeichnet**, das es ein Luftkanalsystem (1) nach einem der Ansprüche 1 bis 8 umfasst.

10. Schienenfahrzeug nach Anspruch 9, **dadurch gekennzeichnet, dass** der erste Teil-Lüftungskanal (3) als Dachluftkanal in einer Decke des Fahrzeugs angeordnet ist, und dass der zweite Teil-Lüftungskanal (4) in Seitenwänden des Schienenfahrzeugs (2) angeordnet ist.

## Claims

1. Air duct system (1) for a rail vehicle (2) of passenger traffic, having a first part-ventilation duct (3), a second part-ventilation duct (4) and a diaphragm (5) which is retained in a deformable and/or movable manner, wherein the first part-ventilation duct (3) has at least one air outlet (8) for ventilating an inner space (11) of the rail vehicle, **characterized in that** the first part-ventilation duct (3) has at least one opening (9) to the second part-ventilation duct (4), and the diaphragm (5) is retained so as to be able to be deformed and/or moved and is arranged on the air duct system (1) in such a manner that it reduces or closes the opening (9) in a first state and releases the air outlet (8) and, in a second state, it reduces or closes the air outlet (8) and releases the opening (9).

2. Air duct system according to Claim 1, **characterized in that** a plurality of openings (9) are provided over the length of the first part-ventilation duct (3) and/or **in that** a plurality of air outlets (8) are provided over the length of the first part-ventilation duct (3).

3. Air duct system according to either Claim 1 or Claim 2, **characterized in that** the diaphragm (5) for reducing the opening (9) has a hole (10) which has a smaller clear width than the opening (9) and/or **in that** the diaphragm (5) for reducing the air outlet (8) has a hole (10) which has a smaller clear width than the air outlet (8).

4. Air duct system according to one of Claims 1 to 3, **characterized in that** the diaphragm (5) comprises an air-tight textile or textile which is coated so as to be air-tight.

5. Air duct system according to one of Claims 1 to 4, **characterized in that** a movement and/or deformation of the diaphragm (5) is brought about in a manner free from foreign energy, simply by changing the air pressure at the diaphragm (5) in the air duct system (1).

6. Air duct system according to one of Claims 1 to 5, **characterized in that** the first part-ventilation duct (3) has at least two air outlets (8) which are spaced apart from each other in the longitudinal direction of the first part-ventilation duct (3), and **in that** the diaphragm (5) extends parallel with a longitudinal axis of the first part-ventilation duct (3) at least between the two air outlets (8) and delimits the first part-ventilation duct (3), wherein the diaphragm (5) and the air outlets (8) are adapted to each other in such a manner that, in the first state of the diaphragm (5), for a predetermined total air flow, the air flows from both air outlets are substantially of the same size.

7. Air duct system according to one of Claims 1 to 6, **characterized in that** the first part-ventilation duct (3) has at least two openings (9) which are spaced apart from each other in the longitudinal direction of the first part-ventilation duct (3) and **in that** the diaphragm (5) extends at least between the two openings (9) parallel with a longitudinal axis of the first part-ventilation duct (3) and delimits the first part-ventilation duct (3), wherein the diaphragm (5) and the openings (9) are adapted to each other in such a manner that, in the second state of the diaphragm (5), for a predetermined total air flow, the air flows from both openings (9) are substantially of the same size.

8. Air duct system according to one of Claims 1 to 7, **characterized in that** the diaphragm (5) is arranged on the air duct system (1) in such a manner that it delimits a cross-section of the first part-ventilation duct (3) for guiding an air flow and **in that** it is retained so as to be able to be deformed and/or moved in such a manner that the cross-section in the second state is smaller than in the first state.

9. Rail vehicle (2) for passenger transport, **characterized in that** it comprises an air duct system (1) according to one of Claims 1 to 8.

10. Rail vehicle according to Claim 9, **characterized in that** the first part-ventilation duct (3) is arranged as a roof air duct in a ceiling of the vehicle, and **in that** the second part-ventilation duct (4) is arranged in side walls of the rail vehicle (2).

## Revendications

1. Système (1) de conduits d'air pour un véhicule ( 2 ) ferroviaire du trafic des voyageurs comprenant un premier conduit ( 3 ) partiel de ventilation, un deuxième conduit ( 4 ) partiel de ventilation et une membrane ( 5 ) maintenue de manière déformable et/ou mobile, le premier conduit ( 3 ) partiel de ventilation ayant au moins une sortie ( 8 ) pour de l'air pour la ventilation d'un espace intérieur ( 11 ) du véhicule ferroviaire,
**caractérisé en ce que** le premier conduit ( 3 ) partiel de ventilation a au moins une ouverture ( 9 ) menant au deuxième conduit ( 4 ) partiel de ventilation et la membrane ( 5 ) est maintenue de manière déformable et/ou mobile et est disposée sur le système ( 1 ) de conduit d'air de façon, dans un premier état, à rapetisser ou à fermer l'ouverture ( 9 ) et à dégager la sortie ( 8 ) pour de l'air et, dans un deuxième état, à rapetisser ou à fermer la sortie ( 8 ) pour de l'air et à dégager l'ouverture ( 9 ).

2. Système de conduits d'air suivant la revendication 1, **caractérisé en ce qu'**il est prévu plusieurs ouvertures ( 9 ) sur la longueur du premier conduit ( 3 ) partiel de ventilation et/ou **en ce qu'**il est prévu plusieurs sorties ( 8 ) pour de l'air sur la longueur du premier conduit ( 3 ) partiel de ventilation.

3. Système de conduits d'air suivant l'une des revendications 1 ou 2, **caractérisé en ce que** la membrane ( 5 ) de rapetissement de l'ouverture ( 9 ) a un trou ( 10 ) qui a un diamètre intérieur plus petit que l'ouverture ( 9 ) et/ou **en ce que** la membrane ( 5 ) de rapetissement de la sortie ( 8 ) pour de l'air a un trou ( 10 ) qui a un diamètre intérieur plus petit que la sortie ( 8 ) pour de l'air.

4. Système de conduits d'air suivant l'une des revendications 1 à 3, **caractérisé en ce que** la membrane ( 5 ) comprend un textile étanche à l'air ou revêtu d'une manière étanche à l'air.

5. Système de conduits d'air suivant l'une des revendications 1 à 4, **caractérisé en ce qu'**un déplacement et/ou une déformation de la membrane ( 5 ) est produit indépendamment d'une énergie extérieure seulement par une variation de la pression de l'air sur la membrane ( 5 ) dans le système ( 1 ) de conduits d'air.

6. Système de conduits d'air suivant l'une des revendications 1 à 5, **caractérisé en ce que** le premier conduit ( 3 ) partiel de ventilation a au moins deux sorties ( 8 ) pour de l'air à distance l'une de l'autre dans la direction longitudinale du premier conduit ( 3 ) partiel de ventilation et **en ce que** la membrane s'étend au moins entre les deux sorties ( 8 ) pour de l'air parallèlement à un axe longitudinal du premier conduit ( 3 ) partiel de ventilation et délimite le premier conduit ( 3 ) partiel de ventilation, la membrane ( 5 ) et les sorties ( 8 ) pour de l'air étant adaptées les uns aux autres de manière à ce que, dans le premier état de la membrane ( 5 ), pour un courant d'air total donné à l'avance, les courants d'air sortant des deux sorties pour de l'air soient sensiblement les mêmes.

7. Système de conduits d'air suivant l'une des revendications 1 à 6, **caractérisé en ce que** le premier conduit ( 3 ) partiel de ventilation a au moins deux ouvertures ( 9 ) à distance l'une de l'autre dans la direction longitudinale du premier conduit ( 3 ) partiel de ventilation et **en ce que** la membrane ( 5 ) s'étend au moins entre les deux ouvertures ( 9 ) parallèlement à un axe longitudinal du premier conduit ( 3 ) partiel de ventilation et délimite le premier conduit ( 3 ) partiel de ventilation, la membrane ( 5 ) et les ouvertures ( 9 ) étant adaptées les uns aux autres de manière à ce que, dans le deuxième état de la membrane ( 5 ), pour un courant d'air total donné à l'avance, les courants d'air sortant des deux ouvertures ( 9 ) soient sensiblement les mêmes.

8. Système de conduits d'air suivant l'une des revendications 1 à 7, **caractérisé en ce que** la membrane ( 5 ) est disposée sur le système ( 1 ) de conduits d'air de manière à délimiter une section transversale du premier conduit ( 3 ) partiel de ventilation pour conduire un courant d'air et **en ce qu'**elle est maintenue de manière à pouvoir être déformée et/ou déplacée de façon à ce que la section transversale soit plus petite dans le deuxième état que dans le premier état.

9. Véhicule ( 2 ) ferroviaire du trafic des voyageurs, **caractérisé en ce qu'**il comprend un système ( 1 ) de conduits d'air suivant l'une des revendications 1 à 8.

10. Véhicule ferroviaire suivant la revendication 9, **caractérisé en ce que** le premier conduit ( 3 ) partiel de ventilation est disposé comme conduit d'air en toit dans un plafond du véhicule, et **en ce que** le deuxième conduit ( 4 ) partiel de ventilation est disposé dans des parois latérales du véhicule ( 2 ) ferroviaire.
